# EUROPÄISCHE PATENTSCHRIFT

(11) **EP 4 200 161 B1**
(45) Veröffentlichungstag und Bekanntmachung des Hinweises auf die Patenterteilung: **24.01.2024**
(21) Anmeldenummer: 22772437.4
(22) Anmeldetag: 26.08.2022
(51) Int. Cl.: B60P 1/64, B60P 3/00

(54) **BODENSYSTEM UND LAGERSYSTEM**
FLOOR SYSTEM AND STORAGE SYSTEM
SYSTÈME DE PLANCHER ET SYSTÈME DE STOCKAGE

(30) Priorität: 27.08.2021 DE 202021104634 U
(43) Veröffentlichungstag der Anmeldung: 28.06.2023
(73) Patentinhaber: Bader, Olaf, 59379 Selm (DE)
(72) Erfinder: Bader, Olaf, 59379 Selm (DE)
(74) Vertreter: Bourgeois, Christian
(86) Internationale Anmeldenummer: PCT/EP2022/073823
(87) Internationale Veröffentlichungsnummer: WO 2023/025951

(56) Entgegenhaltungen:
- DE-A1-102009 044 527
- DE-A1-102018 119 989
- DE-U- 6 604 982
- US-A1- 2016 129 299

## Beschreibung

Die Erfindung betrifft ein Bodensystem zum Auflegen auf wenigstens zwei nebeneinander auf einem ebenen Untergrund angeordnete genormte Kleinladungsträger, insbesondere Eurokisten, wobei das Bodensystem wenigstens zwei im Wesentlichen rechteckig ausgebildete Bodenplatten aufweist, wobei jede Bodenplatte randseitig umlaufend im zumindest mittelbaren Wechsel mit Verbindungsaussparungen und Verbindungsvorsprüngen versehen ist, über die die Bodenplatten randseitig formschlüssig miteinander verbindbar sind, wobei einander gegenüberliegende Seiten der jeweiligen Bodenplatte komplementär zueinander ausgebildet sind, wobei jede Bodenplatte randseitig umlaufend mit Verbindungsgeometrien versehen ist, die gleich ausgebildet sind und umlaufend unmittelbar aneinander angrenzen. Zudem betrifft die Erfindung ein Lagersystem zum Lagern von Gegenständen, aufweisend wenigstens zwei nebeneinander auf einem ebenen Untergrund abstellbare Kleinladungsträger.

Genormte Kleinladungsträger sind bekannt und werden zum Lagern von Gegenständen verwendet. Dabei können die Kleinladungsträger auf einem Fußboden, einem Ladeboden eines Fahrzeugs oder einem Regalboden abgestellt werden. Spezielle genormte Kleinladungsträger sind auch als Eurokiste, Euronormbehälter oder Euronormbox bekannt. Diese Kleinladungsträger sind in der Regel stapelbar.

DE 201 06 967 U1 betrifft einen Faltbehälter aus Karton, Pappe oder Wellpappe, mit einem Boden und zumindest weitgehend vertikalen Seitenwänden, wobei unter dem Boden eine Platte aus Karton, Pappe oder Wellpappe als Stapelsicherung angebracht ist, die gegenüber der Bodenfläche umfangsseitig ein die Stapelfähigkeit gewährleistendes Untermaß aufweist. Die Platte kann im Bereich der Faltbehälter-Öffnung anbringbarer oder eigenständiger Deckel sein. Der Faltbehälter kann in etwa die Abmessungen einer standardisierten Eurokiste aufweisen.

DE 10 2009 044 527 A1 betrifft ein Nutzfahrzeug mit einem Hinterräder des Nutzfahrzeugs überdeckenden Laderaum, der eine im wesentlichen rechteckige Grundfläche aufweist, die durch zwei von gegenüber liegenden Längsseiten der Grundfläche nach innen ragende und in Längsrichtung des Nutzfahrzeugs von einer vorderen und einer hinteren Querseite der Grundfläche und in Querrichtung um einen Querabstand voneinander beabstandete Radkästen unterbrochen ist. Auf die Grundfläche des Laderaums können genormte Transportbehälter, insbesondere Eurokisten, aufgestellt werden, die zumindest teilweise mit wenigstens einer einen Zwischenboden bildenden Abdeckplatte abdeckbar sind.

Es ist eine Aufgabe der Erfindung, eine Belegung eines Laderaums mit genormten Kleinladungsträgern zu verbessern.

Diese Aufgabe wird durch die unabhängigen Patentansprüche gelöst. Vorteilhafte Ausgestaltungen sind in den Unteransprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können.

Ein erfindungsgemäßes Bodensystem zum Auflegen auf wenigstens zwei nebeneinander auf einem ebenen Untergrund angeordnete genormte Kleinladungsträger, insbesondere Eurokisten, weist wenigstens zwei im Wesentlichen rechteckig ausgebildete Bodenplatten auf, wobei jede Bodenplatte randseitig umlaufend im zumindest mittelbaren Wechsel mit Verbindungsaussparungen und Verbindungsvorsprüngen versehen ist, über die die Bodenplatten randseitig formschlüssig miteinander verbindbar sind, wobei einander gegenüberliegende Seiten der jeweiligen Bodenplatte komplementär zueinander ausgebildet sind, wobei jede Bodenplatte randseitig umlaufend mit Verbindungsgeometrien versehen ist, die gleich ausgebildet sind und umlaufend unmittelbar aneinander angrenzen, wobei jede Verbindungsgeometrie durch einen ersten Randabschnitt der Bodenplatte, eine Verbindungsaussparung, einen Verbindungsvorsprung und einen zweiten Randabschnitt der Bodenplatte in dieser Reihenfolge gebildet ist, und wobei die Verbindungsaussparung der jeweiligen Verbindungsgeometrie unmittelbar an den Verbindungsvorsprung dieser Verbindungsgeometrie angrenzt.

Mittels des erfindungsgemäßen Bodensystems kann ein Boden, insbesondere Zwischenboden, auf den Kleinladungsträgern gebildet werden, auf dem Objekte, beispielsweise weitere Kleinladungsträger, abstellbar sind. Zudem kann der derart ausgebildete Boden begehbar sein, so dass eine Zugänglichkeit des Laderaums nicht durch die auf den Laderaumboden abgestellten Kleinladungsträger beeinträchtigt wird. Dadurch ist der teilweise mit den Kleinladungsträgern belegte Laderaum optimaler nutzbar.

Zur Ausbildung des Bodens mittels des Bodensystems werden die Bodenplatten einfach auf die Kleinladungsträger aufgelegt und randseitig miteinander verbunden. Dieser Vorgang ist ohne die Verwendung eines Werkzeugs möglich und somit unter sehr geringem Aufwand realisierbar. Dabei können die Kleinladungsträger unmittelbar benachbart zueinander oder seitlich beabstandet voneinander angeordnet sein.

Durch das Vorhandensein der Verbindungsaussparungen und Verbindungsvorsprünge am Rand der jeweiligen Bodenplatte ist diese lediglich im Wesentlichen rechteckig ausgebildet, nicht mathematisch exakt rechteckig ausgebildet. Dabei kann wenigstens eine Bodenplatte beispielsweise auch quadratisch ausgebildet sein. Insbesondere können die Bodenplatten gleich oder unterschiedlich rechteckig ausgebildet sein.

Dass die Verbindungsaussparungen und Verbindungsvorsprüngen der jeweiligen Bodenplatte randseitig umlaufend im zumindest mittelbaren Wechsel angeordnet sind, soll bedeuten, dass entweder auf die jeweilige Verbindungsaussparung ein Verbindungsvorsprung unmittelbar folgt oder dass zwischen der Verbindungsaussparung und dem Verbindungsvorsprung ein Randabschnitt der Bodenplatte angeordnet ist, so dass der Verbindungsvorsprung lediglich mittelbar auf die Verbindungsaussparung folgt.

Die Verbindungsaussparungen und Verbindungsvorsprünge der Bodenplatten können derart ausgebildet sein, dass die darüber randseitig formschlüssig miteinander verbundenen Bodenplatten in ihrer Erstreckungsebene nicht voneinander getrennt werden können, wodurch der mit dem erfindungsgemäßen Bodensystem gebildete Boden robuster wird. Zum Lösen der Bodenplatten voneinander muss dann wenigstens eine der Bodenplatten zunächst quer zu ihrer Erstreckungsebene verlagert werden, so dass der Formschluss zwischen den Bodenplatten aufgehoben wird und eine Trennung der Bodenplatten voneinander möglich ist.

Da einander gegenüberliegende Seiten der jeweiligen Bodenplatte komplementär zueinander ausgebildet sind, können gleich ausgebildete Bodenplatten mit oder ohne Versatz in einer Reihe zueinander angeordnet und miteinander verbunden werden.

Gemäß einer vorteilhaften Ausgestaltung ist wenigstens eine Verbindungsaussparung schwalbenschwanzförmig ausgebildet und wenigstens ein Verbindungsvorsprung hierzu komplementär schwalbenschwanzförmig ausgebildet. Hierdurch kann ein Formschluss zwischen den Bodenplatten hergestellt werden, der ein Trennen der beiden entsprechend formschlüssig miteinander verbundenen Bodenplatten in ihrer Erstreckungsebene verhindert, was den durch die Bodenplatten bzw. das Bodensystem gebildeten Boden robuster macht.

Gemäß einer weiteren vorteilhaften Ausgestaltung sind die Bodenplatten gleich ausgebildet. Hierdurch sind die Bodenplatte als Gleichteile gegeben und somit in großer Stückzahl kostengünstig herstellbar.

Gemäß einer weiteren vorteilhaften Ausgestaltung ist an einer dem Kleinladungsträger abgewandten Oberseite von wenigstens einer Bodenplatte wenigstens eine Sicherungsvertiefung zum Sichern eines auf die Bodenplatte aufgestellten Kleinladungsträgers gegen ein Verrutschen gegenüber der Bodenplatte ausgebildet. Die Vertiefung kann beispielsweise als Sackloch oder als eine die Bodenplatte vollständig durchdringende Durchbrechung, insbesondere Durchgangsbohrung, ausgebildet sein.

Gemäß einer weiteren vorteilhaften Ausgestaltung ist an wenigstens einer Bodenplatte mittig wenigstens eine Durchbrechung ausgebildet, durch die mittig ein monolithisch mit der übrigen Bodenplatte verbundener Griffabschnitt der Bodenplatte verläuft. Die Bodenplatte kann an ihrem Griffabschnitt, der im Bereich des Schwerpunkts der Bodenplatte angeordnet ist, ergriffen und gehandhabt werden, so dass das Verbinden von Bodenplatten miteinander nicht durch das Ergreifen eines Randabschnitts der jeweiligen Bodenplatte behindert wird.

Gemäß einer weiteren vorteilhaften Ausgestaltung ist eine dem Kleinladungsträger zugewandte Unterseite von wenigstens einer Bodenplatte kleiner als die Oberseite der Bodenplatte. Hierdurch kann die Unterseite der Bodenplatte in die Aufnahmeöffnung eines Kleinladungsträgers eingeführt werden, während die Oberseite der Bodenplatte im Bereich der Verbindungsvorsprünge über die Oberseite des Kleinladungsträgers hinausragt. Dies sichert die Bodenplatte gegen ein Verrutschen gegenüber dem Kleinladungsträger. Vorzugsweise ist dabei zwischen der Unterseite der Bodenplatte und der umlaufenden Seitenwand des Kleinladungsträgers ein vorgegebenes Spiel vorhanden, um Fertigungstoleranzen ausgleichen zu können.

Gemäß einer weiteren vorteilhaften Ausgestaltung ist zwischen der Oberseite und der Unterseite randseitig eine umlaufende Abstufung ausgebildet. Die Abstufung kann durch eine einzige umlaufende Stufe an dem Rand der Bodenplatte gebildet sein. Alternativ kann sich die Bodenplatte ausgehend von ihrer Oberseite kontinuierlich in Richtung ihrer Unterseite verjüngen, also konisch ausgebildet sein.

Gemäß einer weiteren vorteilhaften Ausgestaltung ist wenigstens eine Bodenplatte zumindest teilweise als Flachpressplatte ausgebildet. Dies macht eine kostengünstige Herstellung einer robusten und leichtgewichtigen Bodenplatte möglich.

Gemäß einer weiteren vorteilhaften Ausgestaltung ist die Flachpressplatte einseitig oder beidseitig mit einem Laminat versehen. Hierdurch kann die Bodenplatte robuster gegen mechanische oder chemische Einwirkungen gemacht werden.

Ein erfindungsgemäßes Lagersystem zum Lagern von Gegenständen weist wenigstens zwei nebeneinander auf einem ebenen Untergrund abstellbare Kleinladungsträger und wenigstens ein Bodensystem nach einer der oben genannten Ausgestaltungen oder einer Kombination von wenigstens zwei dieser Ausgestaltungen miteinander auf.

Mit dem Ladungssystem sind die oben mit Bezug auf das Bodensystem genannten Vorteile entsprechend verbunden. Die Ladungsträger sind vorzugsweise genormte Kleinladungsträger, insbesondere Eurokisten.

Gemäß einer vorteilhaften Ausgestaltung ist die jeweilige Bodenplatte im Bereich der Verbindungsvorsprünge größer und im Bereich der Verbindungsaussparungen kleiner als eine Oberseite des jeweiligen Kleinladungsträgers dimensioniert. Dies ermöglicht es, dass eine auf einem Kleinladungsträger aufliegende Bodenplatte sich über ihre Verbindungsvorsprünge, die in die Verbindungsaussparungen einer benachbarten Bodenplatte eingreifen, auch auf einem benachbart angeordneten Kleinladungsträger abstützen kann. Dadurch kann beispielsweise eine Bodenplatte auch gewissermaßen schwebend zwischen zwei seitlich beabstandet voneinander angeordneten Kleinladungsträgern angeordnet sein, auf denen die Bodenplatte jeweils lediglich mit ihren Verbindungsvorsprüngen aufliegt.

Ein weiteres erfindungsgemäßes Bodensystem zum Auflegen auf wenigstens zwei nebeneinander auf einem ebenen Untergrund angeordnete genormte Kleinladungsträger, insbesondere Eurokisten, weist wenigstens zwei im Wesentlichen rechteckig ausgebildete Bodenplatten auf, wobei jede Bodenplatte randseitig umlaufend im zumindest mittelbaren Wechsel mit Verbindungsaussparungen und Verbindungsvorsprüngen versehen ist, über die die Bodenplatten randseitig formschlüssig miteinander verbindbar sind, wobei einander gegenüberliegende Seiten der jeweiligen Bodenplatte komplementär zueinander ausgebildet sind, wobei eine dem Kleinladungsträger zugewandte Unterseite von wenigstens einer Bodenplatte kleiner als die Oberseite der Bodenplatte ist, und wobei zwischen der Oberseite und der Unterseite randseitig eine umlaufende Abstufung ausgebildet ist.

Mittels des erfindungsgemäßen Bodensystems kann ein Boden, insbesondere Zwischenboden, auf den Kleinladungsträgern gebildet werden, auf dem Objekte, beispielsweise weitere Kleinladungsträger, abstellbar sind. Zudem kann der derart ausgebildete Boden begehbar sein, so dass eine Zugänglichkeit des Laderaums nicht durch die auf den Laderaumboden abgestellten Kleinladungsträger beeinträchtigt wird. Dadurch ist der teilweise mit den Kleinladungsträgern belegte Laderaum optimaler nutzbar.

Zur Ausbildung des Bodens mittels des Bodensystems werden die Bodenplatten einfach auf die Kleinladungsträger aufgelegt und randseitig miteinander verbunden. Dieser Vorgang ist ohne die Verwendung eines Werkzeugs möglich und somit unter sehr geringem Aufwand realisierbar. Dabei können die Kleinladungsträger unmittelbar benachbart zueinander oder seitlich beabstandet voneinander angeordnet sein.

Durch das Vorhandensein der Verbindungsaussparungen und Verbindungsvorsprünge am Rand der jeweiligen Bodenplatte ist diese lediglich im Wesentlichen rechteckig ausgebildet, nicht mathematisch exakt rechteckig ausgebildet. Dabei kann wenigstens eine Bodenplatte beispielsweise auch quadratisch ausgebildet sein. Insbesondere können die Bodenplatten gleich oder unterschiedlich rechteckig ausgebildet sein.

Dass die Verbindungsaussparungen und Verbindungsvorsprüngen der jeweiligen Bodenplatte randseitig umlaufend im zumindest mittelbaren Wechsel angeordnet sind, soll bedeuten, dass entweder auf die jeweilige Verbindungsaussparung ein Verbindungsvorsprung unmittelbar folgt oder dass zwischen der Verbindungsaussparung und dem Verbindungsvorsprung ein Randabschnitt der Bodenplatte angeordnet ist, so dass der Verbindungsvorsprung lediglich mittelbar auf die Verbindungsaussparung folgt.

Die Verbindungsaussparungen und Verbindungsvorsprünge der Bodenplatten können derart ausgebildet sein, dass die darüber randseitig formschlüssig miteinander verbundenen Bodenplatten in ihrer Erstreckungsebene nicht voneinander getrennt werden können, wodurch der mit dem erfindungsgemäßen Bodensystem gebildete Boden robuster wird. Zum Lösen der Bodenplatten voneinander muss dann wenigstens eine der Bodenplatten zunächst quer zu ihrer Erstreckungsebene verlagert werden, so dass der Formschluss zwischen den Bodenplatten aufgehoben wird und eine Trennung der Bodenplatten voneinander möglich ist.

Da einander gegenüberliegende Seiten der jeweiligen Bodenplatte komplementär zueinander ausgebildet sind, können gleich ausgebildete Bodenplatten mit oder ohne Versatz in einer Reihe zueinander angeordnet und miteinander verbunden werden.

Da die dem Kleinladungsträger zugewandte Unterseite von wenigstens einer Bodenplatte kleiner als die Oberseite der Bodenplatte ist, kann die Unterseite der Bodenplatte in die Aufnahmeöffnung eines Kleinladungsträgers eingeführt werden, während die Oberseite der Bodenplatte im Bereich der Verbindungsvorsprünge über die Oberseite des Kleinladungsträgers hinausragt. Dies sichert die Bodenplatte gegen ein Verrutschen gegenüber dem Kleinladungsträger. Vorzugsweise ist dabei zwischen der Unterseite der Bodenplatte und der umlaufenden Seitenwand des Kleinladungsträgers ein vorgegebenes Spiel vorhanden, um Fertigungstoleranzen ausgleichen zu können.

Die zwischen der Oberseite und der Unterseite randseitig umlaufend ausgebildete Abstufung kann durch eine einzige umlaufende Stufe an dem Rand der Bodenplatte gebildet sein. Alternativ kann sich die Bodenplatte ausgehend von ihrer Oberseite kontinuierlich in Richtung ihrer Unterseite verjüngen, also konisch ausgebildet sein.

Gemäß einer vorteilhaften Ausgestaltung ist wenigstens eine Verbindungsaussparung schwalbenschwanzförmig ausgebildet und wenigstens ein Verbindungsvorsprung hierzu komplementär schwalbenschwanzförmig ausgebildet. Hierdurch kann ein Formschluss zwischen den Bodenplatten hergestellt werden, der ein Trennen der beiden entsprechend formschlüssig miteinander verbundenen Bodenplatten in ihrer Erstreckungsebene verhindert, was den durch die Bodenplatten bzw. das Bodensystem gebildeten Boden robuster macht.

Gemäß einer weiteren vorteilhaften Ausgestaltung ist jede Bodenplatte randseitig umlaufend mit Verbindungsgeometrien versehen, die gleich ausgebildet sind, umlaufend unmittelbar aneinander angrenzen und jeweils durch einen ersten Randabschnitt der Bodenplatte, eine Verbindungsaussparung, einen Verbindungsvorsprung und einen zweiten Randabschnitt der Bodenplatte in dieser Reihenfolge gebildet sind, wobei die Verbindungsaussparung der jeweiligen Verbindungsgeometrie unmittelbar an den Verbindungsvorsprung dieser Verbindungsgeometrie angrenzt. Diese spezielle geometrische Ausgestaltung der Bodenplatten lässt sich einfach herstellen und ermöglicht die oben genannten Vorteile der Erfindung auf besondere Art und Weise.

Gemäß einer weiteren vorteilhaften Ausgestaltung sind die Bodenplatten gleich ausgebildet. Hierdurch sind die Bodenplatte als Gleichteile gegeben und somit in großer Stückzahl kostengünstig herstellbar.

Gemäß einer weiteren vorteilhaften Ausgestaltung ist an einer dem Kleinladungsträger abgewandten Oberseite von wenigstens einer Bodenplatte wenigstens eine Sicherungsvertiefung zum Sichern eines auf die Bodenplatte aufgestellten Kleinladungsträgers gegen ein Verrutschen gegenüber der Bodenplatte ausgebildet. Die Vertiefung kann beispielsweise als Sackloch oder als eine die Bodenplatte vollständig durchdringende Durchbrechung, insbesondere Durchgangsbohrung, ausgebildet sein.

Gemäß einer weiteren vorteilhaften Ausgestaltung ist an wenigstens einer Bodenplatte mittig wenigstens eine Durchbrechung ausgebildet, durch die mittig ein monolithisch mit der übrigen Bodenplatte verbundener Griffabschnitt der Bodenplatte verläuft. Die Bodenplatte kann an ihrem Griffabschnitt, der im Bereich des Schwerpunkts der Bodenplatte angeordnet ist, ergriffen und gehandhabt werden, so dass das Verbinden von Bodenplatten miteinander nicht durch das Ergreifen eines Randabschnitts der jeweiligen Bodenplatte behindert wird.

Gemäß einer weiteren vorteilhaften Ausgestaltung ist wenigstens eine Bodenplatte zumindest teilweise als Flachpressplatte ausgebildet. Dies macht eine kostengünstige Herstellung einer robusten und leichtgewichtigen Bodenplatte möglich.

Gemäß einer weiteren vorteilhaften Ausgestaltung ist die Flachpressplatte einseitig oder beidseitig mit einem Laminat versehen. Hierdurch kann die Bodenplatte robuster gegen mechanische oder chemische Einwirkungen gemacht werden.

Ein weiteres erfindungsgemäßes Lagersystem zum Lagern von Gegenständen weist wenigstens zwei nebeneinander auf einem ebenen Untergrund abstellbare Kleinladungsträger und wenigstens ein Bodensystem nach einer der oben genannten Ausgestaltungen oder einer Kombination von wenigstens zwei dieser Ausgestaltungen miteinander auf.

Mit dem Ladungssystem sind die oben mit Bezug auf das Bodensystem genannten Vorteile entsprechend verbunden. Die Ladungsträger sind vorzugsweise genormte Kleinladungsträger, insbesondere Eurokisten.

Gemäß einer vorteilhaften Ausgestaltung ist die jeweilige Bodenplatte im Bereich der Verbindungsvorsprünge größer und im Bereich der Verbindungsaussparungen kleiner als eine Oberseite des jeweiligen Kleinladungsträgers dimensioniert. Dies ermöglicht es, dass eine auf einem Kleinladungsträger aufliegende Bodenplatte sich über ihre Verbindungsvorsprünge, die in die Verbindungsaussparungen einer benachbarten Bodenplatte eingreifen, auch auf einem benachbart angeordneten Kleinladungsträger abstützen kann. Dadurch kann beispielsweise eine Bodenplatte auch gewissermaßen schwebend zwischen zwei seitlich beabstandet voneinander angeordneten Kleinladungsträgern angeordnet sein, auf denen die Bodenplatte jeweils lediglich mit ihren Verbindungsvorsprüngen aufliegt.

Im Folgenden wird die Erfindung unter Bezugnahme auf die beigefügten Figuren anhand bevorzugter Ausführungsformen beispielhaft erläutert, wobei die nachfolgend genannten Merkmale sowohl jeweils für sich genommen als auch in unterschiedlicher Kombination miteinander einen vorteilhaften und/oder weiterbildenden Aspekt der Erfindung darstellen können. Es zeigt:
- Fig. 1A: eine schematische Draufsicht auf eine Oberseite eines Ausführungsbeispiels für eine erfindungsgemäße Bodenplatte;
- Fig. 1B: eine schematische Draufsicht auf eine Unterseite der in Fig. 1A gezeigten Bodenplatte;
- Fig. 2A: eine schematische Draufsicht auf eine Oberseite eines weiteren Ausführungsbeispiels für eine erfindungsgemäße Bodenplatte;
- Fig. 2B: eine schematische Draufsicht auf eine Unterseite der in Fig. 2A gezeigten Bodenplatte;
- Fig. 3A: eine schematische Draufsicht auf eine Oberseite eines weiteren Ausführungsbeispiels für eine erfindungsgemäße Bodenplatte;
- Fig. 3B: eine schematische Draufsicht auf eine Unterseite der in Fig. 3A gezeigten Bodenplatte;
- Fig. 4A: eine schematische Draufsicht auf eine Oberseite eines Ausführungsbeispiels für eine erfindungsgemäße Bodenplatte;
- Fig. 4B: eine schematische Draufsicht auf eine Unterseite der in Fig. 4A gezeigten Bodenplatte;
- Fig. 5A: eine schematische Draufsicht auf eine Oberseite eines weiteren Ausführungsbeispiels für eine erfindungsgemäße Bodenplatte;
- Fig. 5B: eine schematische Draufsicht auf eine Unterseite der in Fig. 5A gezeigten Bodenplatte;
- Fig. 6A: eine schematische Draufsicht auf eine Oberseite eines weiteren Ausführungsbeispiels für eine erfindungsgemäße Bodenplatte;
- Fig. 6B: eine schematische Draufsicht auf eine Unterseite der in Fig. 6A gezeigten Bodenplatte;
- Fig. 7: eine schematische und perspektivische Darstellung eines Ausführungsbeispiels für ein erfindungsgemäßes Lagersystem;
- Fig. 8: eine schematische und perspektivische Darstellung eines weiteren Ausführungsbeispiels für ein erfindungsgemäßes Lagersystem;
- Fig. 9a: eine schematische und perspektivische Darstellung eines weiteren Ausführungsbeispiels für ein erfindungsgemäßes Lagersystem;
- Fig. 9b: eine weitere schematische und perspektivische Darstellung des in Fig. 9a gezeigten Lagersystems;
- Fig. 10a: eine schematische und perspektivische Darstellung von Details eines weiteren Ausführungsbeispiels für ein erfindungsgemäßes Lagersystem;
- Fig. 10b: eine schematische und perspektivische Darstellung weiterer Details des in Fig. 10a gezeigten Lagersystems; und
- Fig. 10c: eine Seitenansicht des in den Fign. 10a und 10b gezeigten Lagersystems.

In den Figuren sind gleiche bzw. funktionsgleiche Bauteile mit denselben Bezugszeichen versehen. Eine wiederholte Beschreibung solcher Bauteile kann weggelassen sein.

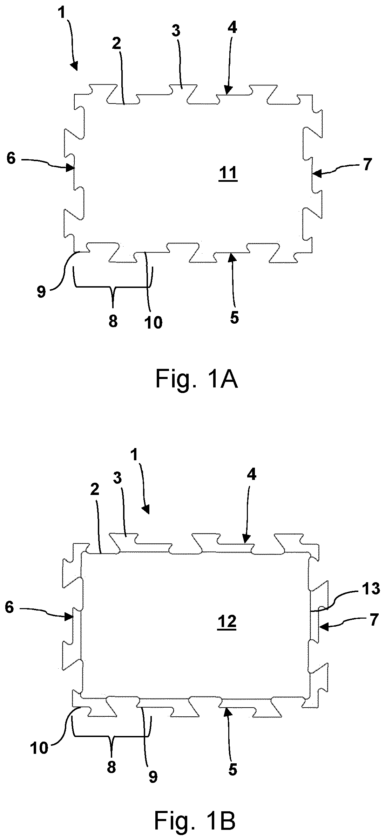

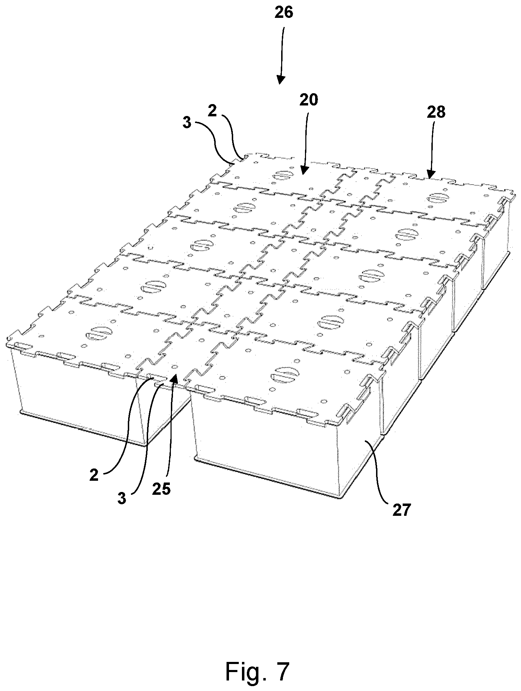

Fig. 1A zeigt eine schematische Draufsicht auf eine Oberseite 11 eines Ausführungsbeispiels für eine erfindungsgemäße Bodenplatte 1 eines in Fig. 1A nicht gezeigten Bodensystems zum Auflegen auf wenigstens zwei nebeneinander auf einem ebenen Untergrund angeordnete, nicht gezeigte genormte Kleinladungsträger, insbesondere Eurokisten. Das Bodensystem kann beispielsweise entsprechend Fig. 7 ausgebildet sein. Alternativ kann das Bodensystem irgendeine Kombination von wenigstens zwei Bodenpatten (Fig. 1A: 1) entsprechend den Fign. 1A bis 6B aufweisen.

Die Bodenplatte 1 ist im Wesentlichen rechteckig ausgebildet, nicht jedoch quadratisch. Die Bodenplatte 1 ist randseitig umlaufend im zumindest mittelbaren Wechsel mit Verbindungsaussparungen 2 und Verbindungsvorsprüngen 3 versehen, über die Bodenplatten 1 randseitig formschlüssig miteinander verbindbar sind, wie es beispielsweise in Fig. 7 gezeigt ist. Dabei sind einander gegenüberliegende Seiten 4 und 5 bzw. 6 und 7 der Bodenplatte 1 komplementär zueinander ausgebildet. Jede Verbindungsaussparung 2 ist schwalbenschwanzförmig ausgebildet und jeder Verbindungsvorsprung 3 ist hierzu komplementär schwalbenschwanzförmig ausgebildet.

Insbesondere ist die Bodenplatte 1 randseitig umlaufend mit Verbindungsgeometrien 8 versehen, die gleich ausgebildet sind, umlaufend unmittelbar aneinander angrenzen und jeweils durch einen ersten Randabschnitt 9 der Bodenplatte 1, eine Verbindungsaussparung 2, einen Verbindungsvorsprung 3 und einen zweiten Randabschnitt 10 der Bodenplatte 1 in dieser Reihenfolge gebildet sind. Die Verbindungsaussparung 2 der jeweiligen Verbindungsgeometrie 8 grenzt unmittelbar an den Verbindungsvorsprung 3 dieser Verbindungsgeometrie 8 an.

Die Bodenplatte 1 kann zumindest teilweise als Flachpressplatte ausgebildet sein. Die Flachpressplatte kann einseitig oder beidseitig, also an ihren Großseiten, mit einem nicht gezeigten Laminat versehen sein.

Fig. 1B zeigt eine schematische Draufsicht auf eine Unterseite 12 der in Fig. 1A gezeigten Bodenplatte 1. Es ist gezeigt, dass die dem in Fig. 1B nicht gezeigten Kleinladungsträger zugewandte Unterseite 12 der Bodenplatte 1 kleiner als die in Fig. 1A gezeigte Oberseite der Bodenplatte 1 ist. Hierzu ist zwischen der Oberseite und der Unterseite 12 randseitig eine umlaufende Abstufung 13 ausgebildet.

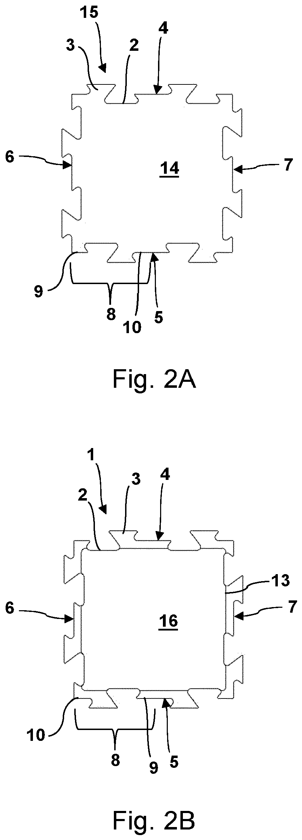

Fig. 2A zeigt eine schematische Draufsicht auf eine Oberseite 14 eines weiteren Ausführungsbeispiels für eine erfindungsgemäße Bodenplatte 15. Die Bodenplatte 15 unterscheidet sich allein dadurch von dem in den Fign. 1A und 1B gezeigten Ausführungsbeispiel, dass die Bodenplatte 15 quadratisch ausgebildet ist. Zur Vermeidung von Wiederholungen wird daher auf die obige Beschreibung zu den Fign. 1A und 1B verwiesen.

Fig. 2B zeigt eine schematische Draufsicht auf eine Unterseite 15 der in Fig. 2A gezeigten Bodenplatte 15. Zur Vermeidung von Wiederholungen wird daher auf die obige Beschreibung zu Fig. 1B verwiesen.

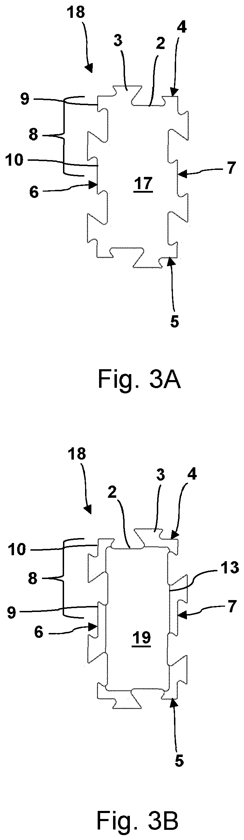

Fig. 3A zeigt eine schematische Draufsicht auf eine Oberseite 17 eines weiteren Ausführungsbeispiels für eine erfindungsgemäße Bodenplatte 18. Die Bodenplatte 18 unterscheidet sich allein dadurch von dem in den Fign. 2A und 2B gezeigten Ausführungsbeispiel, dass die Bodenplatte 18 zwar rechteckig und nicht quadratisch, jedoch halb so groß wie das in den Fign. 2A und 2B gezeigte Ausführungsbeispiel ausgebildet ist. Zur Vermeidung von Wiederholungen wird daher auf die obige Beschreibung zu den Fign. 1A und 1B verwiesen.

Fig. 3B zeigt eine schematische Draufsicht auf eine Unterseite 19 der in Fig. 3A gezeigten Bodenplatte 18. Zur Vermeidung von Wiederholungen wird daher auf die obige Beschreibung zu Fig. 1B verwiesen.

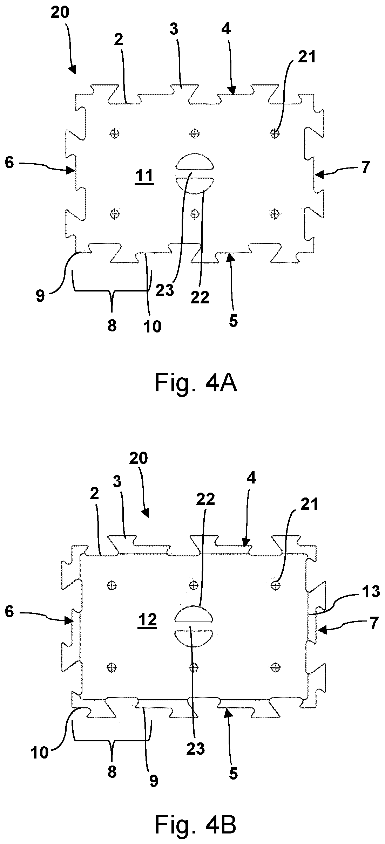

Fig. 4A zeigt eine schematische Draufsicht auf eine Oberseite 11 eines Ausführungsbeispiels für eine erfindungsgemäße Bodenplatte 20. Die Bodenplatte 20 unterscheidet sich dadurch von dem in den Fign. 1A und 1B gezeigten Ausführungsbeispiel, dass an der dem in Fig. 4A nicht gezeigten Kleinladungsträger abgewandten Oberseite 11 der Bodenplatte 20 sechs Sicherungsvertiefungen 21 in Form von Durchgangsbohrungen zum Sichern eines auf die Bodenplatte 20 aufgestellten, nicht gezeigten Kleinladungsträgers gegen ein Verrutschen gegenüber der Bodenplatte 20 ausgebildet sind. Zudem unterscheidet sich die Bodenplatte 20 dadurch von dem in den Fign. 1A und 1B gezeigten Ausführungsbeispiel, dass an der Bodenplatte 20 mittig eine Durchbrechung 22 ausgebildet ist, durch die mittig ein monolithisch mit der übrigen Bodenplatte 20 verbundener Griffabschnitt 23 der Bodenplatte 20 verläuft. Zur Vermeidung von Wiederholungen wird daher auf die obige Beschreibung zu den Fign. 1A und 1B verwiesen.

Fig. 4B zeigt eine schematische Draufsicht auf eine Unterseite der in Fig. 4A gezeigten Bodenplatte 20. Zur Vermeidung von Wiederholungen wird daher auf die obige Beschreibung zu Fig. 1B verwiesen.

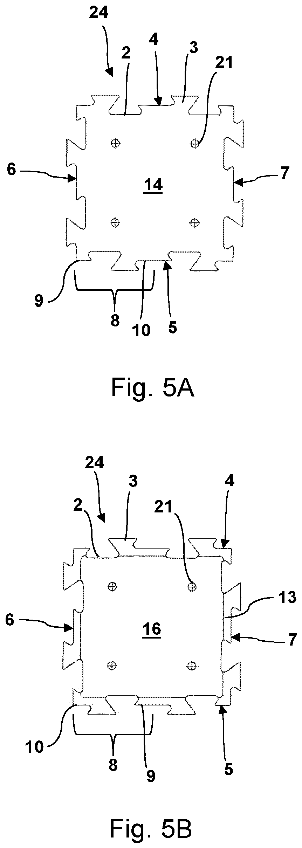

Fig. 5A zeigt eine schematische Draufsicht auf eine Oberseite 14 eines weiteren Ausführungsbeispiels für eine erfindungsgemäße Bodenplatte 24. Die Bodenplatte 24 unterscheidet sich allein dadurch von dem in den Fign. 4A und 4B gezeigten Ausführungsbeispiel, dass die Bodenplatte 24 quadratisch ausgebildet ist. Zur Vermeidung von Wiederholungen wird daher auf die obige Beschreibung zu den Fign. 4A und 4B verwiesen.

Fig. 5B zeigt eine schematische Draufsicht auf eine Unterseite 16 der in Fig. 5A gezeigten Bodenplatte 24. Zur Vermeidung von Wiederholungen wird daher auf die obige Beschreibung zu Fig. 1B verwiesen.

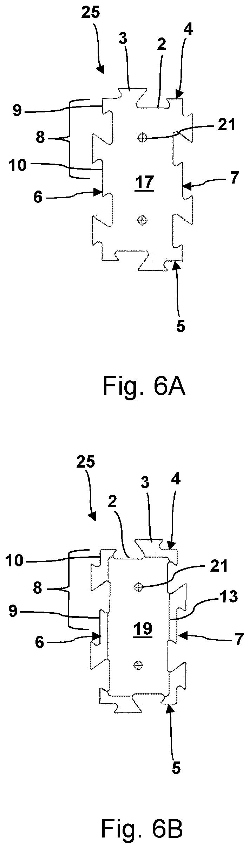

Fig. 6A zeigt eine schematische Draufsicht auf eine Oberseite 17 eines weiteren Ausführungsbeispiels für eine erfindungsgemäße Bodenplatte 25. Die Bodenplatte 25 unterscheidet sich allein dadurch von dem in den Fign. 5A und 5B gezeigten Ausführungsbeispiel, dass die Bodenplatte 25 zwar rechteckig und nicht quadratisch, jedoch halb so groß wie das in den Fign. 5A und 5B gezeigte Ausführungsbeispiel ausgebildet ist. Zur Vermeidung von Wiederholungen wird daher auf die obige Beschreibung zu den Fign. 1A und 1B verwiesen.

Fig. 6B zeigt eine schematische Draufsicht auf eine Unterseite 19 der in Fig. 6A gezeigten Bodenplatte 25. Zur Vermeidung von Wiederholungen wird daher auf die obige Beschreibung zu Fig. 1B verwiesen.

Fig. 7 zeigt eine schematische und perspektivische Darstellung eines Ausführungsbeispiels für ein erfindungsgemäßes Lagersystem 26 zum Lagern von nicht gezeigten Gegenständen.

Das Lagersystem 26 weist zehn auf einem nicht gezeigten ebenen Untergrund abgestellte Kleinladungsträger 27 in Form von Eurokisten auf. Es sind jeweils fünf Kleinladungsträger 27 in einer Reihe angeordnet, wobei die beiden Reihen unter Belassung eines Zwischenraums seitlich beabstandet voneinander angeordnet sind. Auf jeden Kleinladungsträger 27 ist eine Bodenplatte 20 entsprechend dem in den Fign. 4A und 4B gezeigten Ausführungsbeispiel aufgelegt, die ein Ausführungsbeispiel für ein Bodensystem 28 bilden. Die jeweilige Bodenplatte 20 ist im Bereich der Verbindungsvorsprünge 3 größer und im Bereich der Verbindungsaussparungen 2 kleiner als eine Oberseite des jeweiligen Kleinladungsträgers 27 dimensioniert.

Jeweils zwei Bodenplatten 20 sind über eine Bodenplatte 25 entsprechend dem in den Fign. 6A und 6B gezeigten Ausführungsbeispiel miteinander verbunden, wobei auch die Bodenplatten 25 in einer Reihe angeordnet und paarweise miteinander verbunden sind. Die Bodenplatten 25 liegen mit ihren in die Verbindungsaussparungen 2 der Bodenplatten 20 eingreifenden Verbindungsvorsprüngen 3 auf dem jeweiligen Kleinladungsträger 27 auf. So wird ein belastbarer, insbesondere begehbarer, Zwischenboden oberhalb der Kleinladungsträger 27 gebildet, wobei zusätzlich der Zwischenraum zwischen den beiden Reihen aus Kleinladungsträgern 27 als Lagerraum genutzt werden kann.

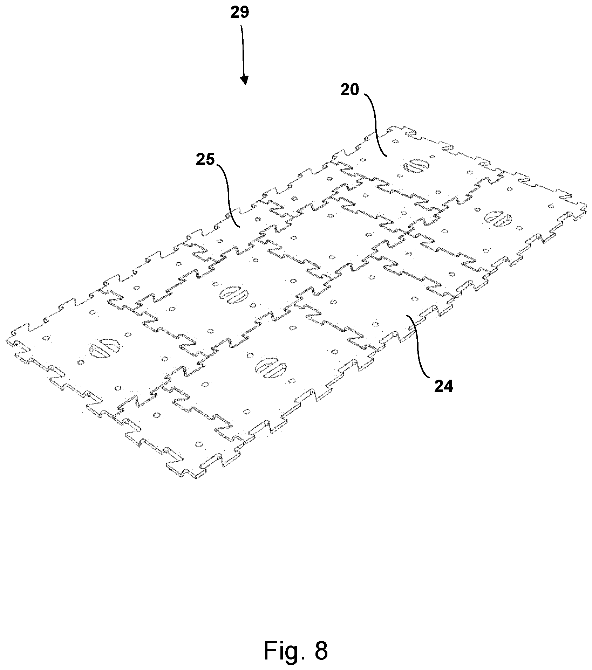

Fig. 8 zeigt eine schematische und perspektivische Darstellung eines weiteren Ausführungsbeispiels für ein erfindungsgemäßes Bodensystem 29 zum Auflegen auf wenigstens zwei nebeneinander auf einem nicht gezeigten ebenen Untergrund angeordnete, nicht gezeigte, genormte Kleinladungsträger, insbesondere Eurokisten.

Das Bodensystem 29 weist fünf Bodenplatten 20 entsprechend dem in den Fign. 4A und 4B gezeigten Ausführungsbeispiel, sechs Bodenplatten 25 entsprechend dem in den Fign. 6A und 6B gezeigten Ausführungsbeispiel und zwei Bodenplatten entsprechend dem in den Fign. 5A und 5B gezeigten Ausführungsbeispiel auf, die zu einer geschlossenen, rechteckigen Fläche miteinander verbunden sind.

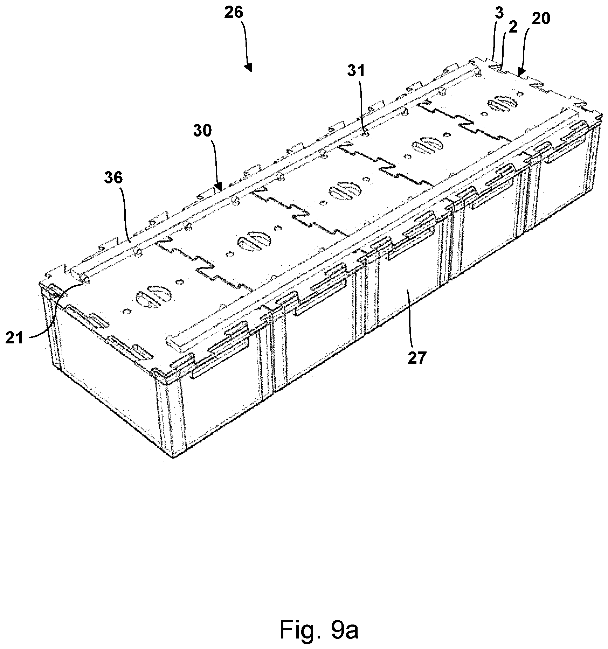

Fig. 9a zeigt eine schematische und perspektivische Darstellung eines weiteren Ausführungsbeispiels für ein erfindungsgemäßes Lagersystem 26 zum Lagern von Gegenständen.

Das Lagersystem 26 weist fünf auf einem nicht gezeigten ebenen Untergrund abgestellte, in einer Reihe angeordnete Kleinladungsträger 27 in Form von Eurokisten auf. Auf jeden Kleinladungsträger 27 ist eine Bodenplatte 20 entsprechend dem in den Fign. 4A und 4B gezeigten Ausführungsbeispiel aufgelegt. Die jeweilige Bodenplatte 20 ist im Bereich der Verbindungsvorsprünge 3 größer und im Bereich der Verbindungsaussparungen 2 kleiner als eine Oberseite des jeweiligen Kleinladungsträgers 27 dimensioniert.

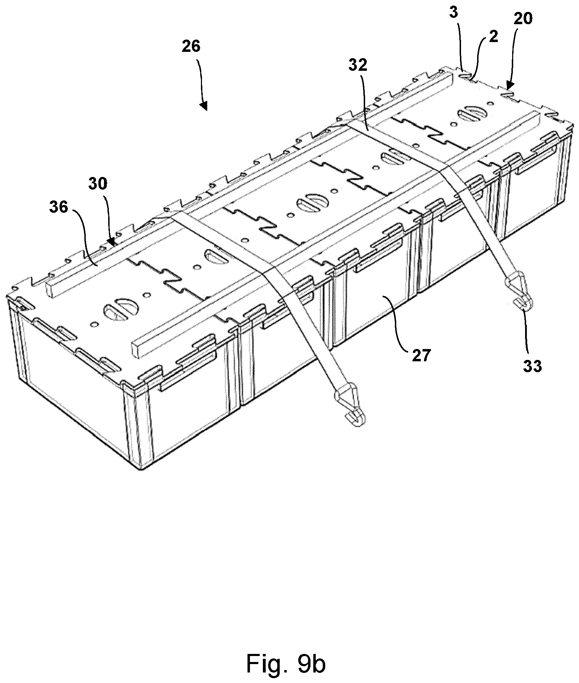

Zudem weist das Lagersystem 26 zwei parallel zueinander verlaufende Verbindungsleisten 30 auf, die beispielsweise aus einem Holzwerkstoff, aus einem Kunststoff oder einem metallischen Werkstoff hergestellt sein können. Jede Verbindungsleiste weist eine starre Leiste 36 und zehn in einer Reihe an der Leiste 36 angeordnete, zylinderförmig ausgebildete Verbindungszapfen 31 auf, die in die als Durchgangsbohrungen ausgebildeten Sicherungsvertiefungen 21 der Bodenplatten 20 einfügbar sind, wie es in Fig. 9b gezeigt ist. Alternativ können alle Verbindungszapfen 31 einer Verbindungsleiste 30 zur gleichen Seite hin gekrümmt sein, so dass die an den Bodenplatten 20 durch Einführen der Verbindungszapfen 31 in die angeordnete Verbindungsleiste 30 als Durchgangsbohrungen ausgebildeten Sicherungsvertiefungen 21 der Bodenplatten 20 nicht vertikal von den Bodenplatten abgehoben werden kann, was den Verbund aus Verbindungsleiste 30 und Bodenplatten 20 verbessert.

Fig. 9b zeigt eine weitere schematische und perspektivische Darstellung des in Fig. 9a gezeigten Lagersystems 26. Die in Fig. 9a gezeigten Verbindungszapfen sind, insbesondere formschlüssig, in die Sicherungsvertiefungen 21 eingefügt, wodurch die Bodenplatten 20 zu einem festen Verbund miteinander verbunden werden.

Zudem weist das Lagersystem 26 zwei Spanngurte 32 mit endseitigen Spannhaken 33 auf, wobei die Spanngurte 32 über die Verbindungsleisten 30 geführt sind.

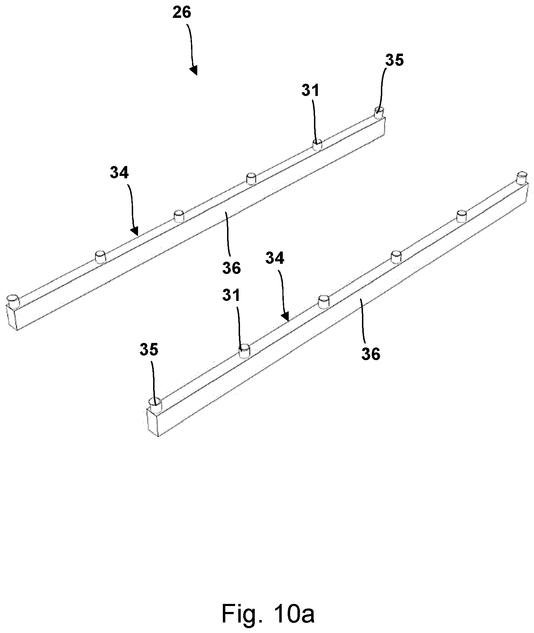

Fig. 10a zeigt eine schematische und perspektivische Darstellung von Details eines weiteren Ausführungsbeispiels für ein erfindungsgemäßes Lagersystem 26 zum Lagern von Gegenständen.

In Fig. 10a sind von dem Lagersystem 26 lediglich zwei parallel zueinander verlaufende Verbindungsleisten 34 gezeigt, die jeweils eine starre Leiste 36, zwei endseitig an der Leiste 36 angeordnete, voneinander weg gekrümmte Verbindungszapfen 35 und vier dazwischen angeordnete, zylinderförmig ausgebildete Verbindungszapfen 31 aufweisen.

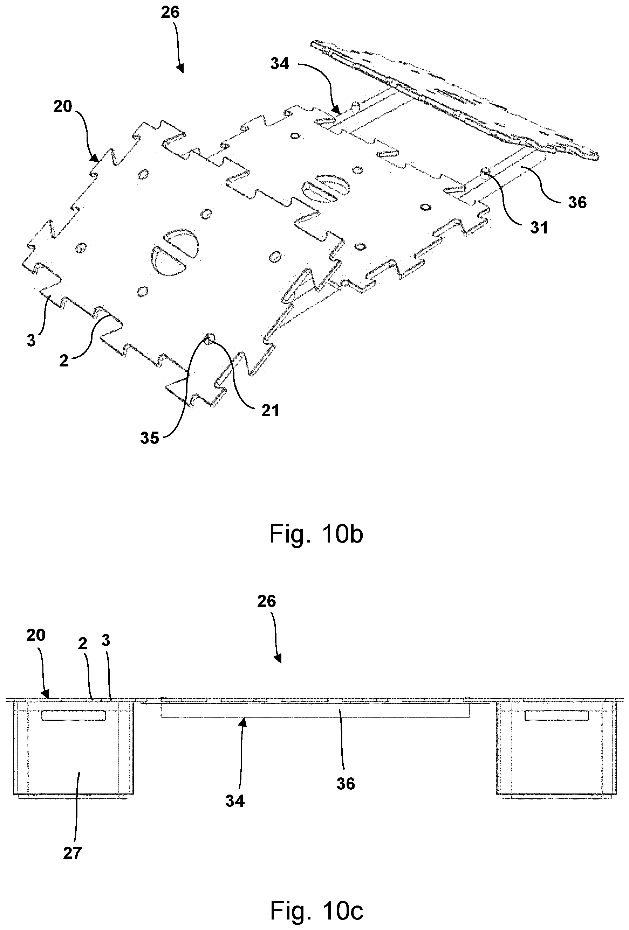

Fig. 10b zeigt eine schematische und perspektivische Darstellung weiterer Details des in Fig. 10a gezeigten Lagersystems 26. Zusätzlich sind insbesondere drei Bodenplatten 20 entsprechend dem in den Fign. 4A und 4B gezeigten Ausführungsbeispiel gezeigt. Die mittlere Bodenplatte 20 ist bereits vollständig mit den Verbindungsleisten 34 verbunden, in dem die Bodenplatte 20 auf die Verbindungsleisten 34 aufgelegt worden ist, so dass die zylinderförmigen Verbindungszapfen 31 in die als Durchgangsbohrungen ausgebildeten Sicherungsvertiefungen 21 der Bodenplatte 20 eingreifen. Anschließend werden die beiden äußeren Bodenplatten 20 mit den Verbindungsleisten 34 verbunden, indem zunächst die gekrümmten Verbindungszapfen 35 in die als Durchgangsbohrungen ausgebildeten Sicherungsvertiefungen 21 der jeweiligen Bodenplatte 20 eingefügt werden, wie es in Fig. 10b gezeigt ist. Die Bodenplatten 20 sind dabei geneigt angeordnet. Danach können die geneigten Bodenplatten 20 abgesenkt werden, so dass die äußeren Verbindungszapfen 31 in die als Durchgangsbohrungen ausgebildeten Sicherungsvertiefungen 21 der jeweiligen Bodenplatte 20 eingreifen, wie es in Fig. 10c gezeigt ist. Hierdurch wird ein Verbund aus den Verbindungsleisten 34 und den Bodenplatten 20 gebildet, der sich nur auf eine bestimmte Art und Weise lösen lässt und daher gegen ein ungewolltes Lösen gesichert ist.

Fig. 10c zeigt eine Seitenansicht des in den Fign. 10a und 10b gezeigten Lagersystems 26. Es sind zusätzlich zwei Kleinladungsträger 27 des Lagersystems 26 in Form von Eurokisten gezeigt. Auf jedem Kleinladungsträger 27 ist eine Bodenplatte 20 angeordnet. Zwischen den beiden Kleinladungsträgern 27 ist der aus den Verbindungsleisten 34 und den drei Bodenplatten 20 entsprechend Fig. 10b gebildete Verbund angeordnet, der endseitig mit der jeweilig auf dem jeweiligen Kleinladungsträger 27 aufliegenden Bodenplatte 20 verbunden ist. Mit dem in den Fign. 10a bis 10c gezeigten Lagersystem 26 ist es also möglich, einen größeren Abstand zwischen Kleinladungsträgern 27 zu überbrücken, um so einen gewünschten Ladeboden ausbilden zu können und gleichzeitig den Platz zwischen den beabstandeten Kleinladungsträgern 27 nutzbar halten zu können.

### Bezugszeichenliste

- 1: Bodenplatte
- 2: Verbindungsaussparung
- 3: Verbindungsvorsprung
- 4: Seite von 1, 15, 18, 20, 24, 25
- 5: Seite von 1, 15, 18, 20, 24, 25
- 6: Seite von 1, 15, 18, 20, 24, 25
- 7: Seite von 1, 15, 18, 20, 24, 25
- 8: Verbindungsgeometrie an 1, 15, 18, 20, 24, 25
- 9: erster Randabschnitt
- 10: zweiter Randabschnitt
- 11: Oberseite von 1, 20
- 12: Unterseite von 1, 20
- 13: Abstufung
- 14: Oberseite von 15, 24
- 15: Bodenplatte
- 16: Unterseite von 15, 24
- 17: Oberseite von 18, 25
- 18: Bodenplatte
- 19: Unterseite von 18, 25
- 20: Bodenplatte
- 21: Sicherungsvertiefung
- 22: Durchbrechung
- 23: Griffabschnitt
- 24: Bodenplatte
- 25: Bodenplatte
- 26: Lagersystem
- 27: Kleinladungsträger
- 28: Bodensystem
- 29: Bodensystem
- 30: Verbindungsleiste
- 31: zylinderförmiger Verbindungszapfen
- 32: Spanngurt
- 33: Spannhaken
- 34: Verbindungsleiste
- 35: gekrümmter Verbindungszapfen
- 36: Leiste

## Patentansprüche

1. Bodensystem (28, 29) zum Auflegen auf wenigstens zwei nebeneinander auf einem ebenen Untergrund angeordnete genormte Kleinladungsträger (27), insbesondere Eurokisten, wobei das Bodensystem (28, 29) wenigstens zwei im Wesentlichen rechteckig ausgebildete Bodenplatten (1, 15, 18, 20, 24, 25) aufweist, **dadurch gekennzeichnet, dass** jede Bodenplatte (1, 15, 18, 20, 24, 25) randseitig umlaufend im zumindest mittelbaren Wechsel mit Verbindungsaussparungen (2) und Verbindungsvorsprüngen (3) versehen ist, über die die Bodenplatten (1, 15, 18, 20, 24, 25) randseitig formschlüssig miteinander verbindbar sind, wobei einander gegenüberliegende Seiten (4, 5, 6, 7) der jeweiligen Bodenplatte (1, 15, 18, 20, 24, 25) komplementär zueinander ausgebildet sind, wobei jede Bodenplatte (1, 15, 18, 20, 24, 25) randseitig umlaufend mit Verbindungsgeometrien (8) versehen ist, die gleich ausgebildet sind und umlaufend unmittelbar aneinander angrenzen, und wobei jede Verbindungsgeometrie (8) durch einen ersten Randabschnitt (9) der Bodenplatte (1, 15, 18, 20, 24, 25), eine Verbindungsaussparung (2), einen Verbindungsvorsprung (3) und einen zweiten Randabschnitt (10) der Bodenplatte (1, 15, 18, 20, 24, 25) in dieser Reihenfolge gebildet ist, wobei die Verbindungsaussparung (2) der jeweiligen Verbindungsgeometrie (8) unmittelbar an den Verbindungsvorsprung (3) dieser Verbindungsgeometrie (8) angrenzt.

2. Bodensystem (28, 29) nach Anspruch 1, **dadurch gekennzeichnet, dass** wenigstens eine Verbindungsaussparung (2) schwalbenschwanzförmig ausgebildet ist und wenigstens ein Verbindungsvorsprung (3) hierzu komplementär schwalbenschwanzförmig ausgebildet ist.

3. Bodensystem (28, 29) nach einem der vorherigen Ansprüche, **dadurch gekennzeichnet, dass** die Bodenplatten (1, 15, 18, 20, 24, 25) gleich ausgebildet sind.

4. Bodensystem (28, 29) nach einem der vorherigen Ansprüche, **dadurch gekennzeichnet, dass** an einer dem Kleinladungsträger (27) abgewandten Oberseite (11, 14, 17) von wenigstens einer Bodenplatte (20, 24, 25) wenigstens eine Sicherungsvertiefung (21) zum Sichern eines auf die Bodenplatte (20, 24, 25) aufgestellten Kleinladungsträgers (27) gegen ein Verrutschen gegenüber der Bodenplatte (20, 24, 25) ausgebildet ist.

5. Bodensystem (28, 29) nach einem der vorherigen Ansprüche, **dadurch gekennzeichnet, dass** eine dem Kleinladungsträger (27) zugewandte Unterseite (12, 16, 19) von wenigstens einer Bodenplatte (1, 15, 18, 20, 24, 25) kleiner als die Oberseite (11, 14, 17) der Bodenplatte (1, 15, 18, 20, 24, 25) ist.

6. Bodensystem (28, 29) nach Anspruch 5, **dadurch gekennzeichnet, dass** zwischen der Oberseite (11, 14, 17) und der Unterseite (12, 16, 19) randseitig eine umlaufende Abstufung (13) ausgebildet ist.

7. Lagersystem (26) zum Lagern von Gegenständen, aufweisend wenigstens zwei nebeneinander auf einem ebenen Untergrund abstellbare Kleinladungsträger (27), **gekennzeichnet durch** wenigstens ein Bodensystem (28, 29) nach einem der Ansprüche 1 bis 6.

8. Lagersystem (26) nach Anspruch 7, **dadurch gekennzeichnet, dass** die jeweilige Bodenplatte (1, 15, 18, 20, 24, 25) im Bereich der Verbindungsvorsprünge (3) größer und im Bereich der Verbindungsaussparungen (2) kleiner als eine Oberseite des jeweiligen Kleinladungsträgers (27) dimensioniert ist.

9. Bodensystem (28, 29) zum Auflegen auf wenigstens zwei nebeneinander auf einem ebenen Untergrund angeordnete genormte Kleinladungsträger (27), insbesondere Eurokisten, wobei das Bodensystem (28, 29) wenigstens zwei im Wesentlichen rechteckig ausgebildete Bodenplatten (1, 15, 18, 20, 24, 25) aufweist,
**dadurch gekennzeichnet, dass** jede Bodenplatte (1, 15, 18, 20, 24, 25) randseitig umlaufend im zumindest mittelbaren Wechsel mit Verbindungsaussparungen (2) und Verbindungsvorsprüngen (3) versehen ist, über die die Bodenplatten (1, 15, 18, 20, 24, 25) randseitig formschlüssig miteinander verbindbar sind, wobei einander gegenüberliegende Seiten (4, 5, 6, 7) der jeweiligen Bodenplatte (1, 15, 18, 20, 24, 25) komplementär zueinander ausgebildet sind, und wobei eine dem Kleinladungsträger (27) zugewandte Unterseite (12, 16, 19) von wenigstens einer Bodenplatte (1, 15, 18, 20, 24, 25) kleiner als die Oberseite (11, 14, 17) der Bodenplatte (1, 15, 18, 20, 24, 25) ist, wobei zwischen der Oberseite (11, 14, 17) und der Unterseite (12, 16, 19) randseitig eine umlaufende Abstufung (13) ausgebildet ist.

10. Bodensystem (28, 29) nach Anspruch 9, **dadurch gekennzeichnet, dass** wenigstens eine Verbindungsaussparung (2) schwalbenschwanzförmig ausgebildet ist und wenigstens ein Verbindungsvorsprung (3) hierzu komplementär schwalbenschwanzförmig ausgebildet ist.

11. Bodensystem (28, 29) nach Anspruch 9 oder 10, **dadurch gekennzeichnet, dass** jede Bodenplatte (1, 15, 18, 20, 24, 25) randseitig umlaufend mit Verbindungsgeometrien (8) versehen ist, die gleich ausgebildet sind, umlaufend unmittelbar aneinander angrenzen und jeweils durch einen ersten Randabschnitt (9) der Bodenplatte (1, 15, 18, 20, 24, 25), eine Verbindungsaussparung (2), einen Verbindungsvorsprung (3) und einen zweiten Randabschnitt (10) der Bodenplatte (1, 15, 18, 20, 24, 25) in dieser Reihenfolge gebildet sind, wobei die Verbindungsaussparung (2) der jeweiligen Verbindungsgeometrie (8) unmittelbar an den Verbindungsvorsprung (3) dieser Verbindungsgeometrie (8) angrenzt.

12. Bodensystem (28, 29) nach einem der Ansprüche 9 bis 11, **dadurch gekennzeichnet, dass** die Bodenplatten (1, 15, 18, 20, 24, 25) gleich ausgebildet sind.

13. Bodensystem (28, 29) nach einem der Ansprüche 9 bis 12, **dadurch gekennzeichnet, dass** an einer dem Kleinladungsträger (27) abgewandten Oberseite (11, 14, 17) von wenigstens einer Bodenplatte (20, 24, 25) wenigstens eine Sicherungsvertiefung (21) zum Sichern eines auf die Bodenplatte (20, 24, 25) aufgestellten Kleinladungsträgers (27) gegen ein Verrutschen gegenüber der Bodenplatte (20, 24, 25) ausgebildet ist.

14. Lagersystem (26) zum Lagern von Gegenständen, aufweisend wenigstens zwei nebeneinander auf einem ebenen Untergrund abstellbare Kleinladungsträger (27), **gekennzeichnet durch** wenigstens ein Bodensystem (28, 29) nach einem der Ansprüche 9 bis 13.

15. Lagersystem (26) nach Anspruch 14, **dadurch gekennzeichnet, dass** die jeweilige Bodenplatte (1, 15, 18, 20, 24, 25) im Bereich der Verbindungsvorsprünge (3) größer und im Bereich der Verbindungsaussparungen (2) kleiner als eine Oberseite des jeweiligen Kleinladungsträgers (27) dimensioniert ist.

## Claims

1. A base system (28, 29) for placing on at least two standardized small load carriers (27) arranged next to one another on a flat subsurface, in particular Euro containers, the base system (28, 29) comprising at least two substantially rectangular base panels (1, 15, 18, 20, 24, 25), **characterized in that** each base panel (1, 15, 18, 20, 24, 25) is provided with connection recesses (2) and connection protrusions (3) around the edge in an at least indirectly alternating manner, via which recesses and protrusions the base panels (1, 15, 18, 20, 24, 25) can be connected to one another at the edges in a form-fitting manner, mutually facing sides (4, 5, 6, 7) of the relevant base panel (1, 15, 18, 20, 24, 25) being designed to be complementary to one another, each base panel (1, 15, 18, 20, 24, 25) being provided with connection geometries (8) around the edge, which geometries are identical and directly adjoin one another in a peripheral manner, and each connection geometry (8) being formed by a first edge portion (9) of the base panel (1, 15, 18, 20, 24, 25), a connection recess (2), a connection protrusion (3), and a second edge portion (10) of the base panel (1, 15, 18, 20, 24, 25) in this order, the connection recess (2) of the relevant connection geometry (8) directly adjoining the connection protrusion (3) of said connection geometry (8).

2. The base system (28, 29) according to claim 1, **characterized in that** at least one connection recess (2) is designed to be dovetail-shaped and at least one connection protrusion (3) is designed to be dovetail-shaped in a complementary manner thereto.

3. The base system (28, 29) according to either of the preceding claims, **characterized in that** the base panels (1, 15, 18, 20, 24, 25) are identical.

4. The base system (28, 29) according to any of the preceding claims, **characterized in that** at least one securing recess (21) for securing a small load carrier (27) placed on the base panel (20, 24, 25) against slipping relative to the base panel (20, 24, 25) is formed on an upper face (11, 14, 17) of at least one base panel (20, 24, 25), which faces away from the small load carrier (27).

5. The base system (28, 29) according to any of the preceding claims,
**characterized in that** a lower face (12, 16, 19) of at least one base panel (1, 15, 18, 20, 24, 25), which faces the small load carrier (27), is smaller than the upper face (11, 14, 17) of the base panel (1, 15, 18, 20, 24, 25).

6. The base system (28, 29) according to claim 5, **characterized in that** a peripheral gradation (13) is formed at the edge between the upper face (11, 14, 17) and the lower face (12, 16, 19).

7. A storage system (26) for storing objects, comprising at least two small load carriers (27) which can be placed next to one another on a flat subsurface,
**characterized by** at least one base system (28, 29) according to any of claims 1 to 6.

8. The storage system (26) according to claim 7, **characterized in that** the relevant base panel (1, 15, 18, 20, 24, 25) has larger dimensions in the region of the connection protrusions (3) and smaller dimensions in the region of the connection recesses (2) than an upper face of the relevant small load carrier (27).

9. A base system (28, 29) for placing on at least two standardized small load carriers (27) arranged next to one another on a flat subsurface, in particular Euro containers, the base system (28, 29) comprising at least two substantially rectangular base panels (1, 15, 18, 20, 24, 25), **characterized in that** each base panel (1, 15, 18, 20, 24, 25) is provided with connection recesses (2) and connection protrusions (3) around the edge in an at least indirectly alternating manner, via which recesses and protrusions the base panels (1, 15, 18, 20, 24, 25) can be connected to one another at the edges in a form-fitting manner, mutually facing sides (4, 5, 6, 7) of the relevant base panel (1, 15, 18, 20, 24, 25) being designed to be complementary to one another, and a lower face (12, 16, 19) of at least one base panel (1, 15, 18, 20, 24, 25), which faces the small load carrier (27), being smaller than the upper face (11, 14, 17) of the base panel (1, 15, 18, 20, 24, 25), a peripheral gradation (13) being formed at the edge between the upper face (11, 14, 17) and the lower face (12, 16, 19).

10. The base system (28, 29) according to claim 9, **characterized in that** at least one connection recess (2) is designed to be dovetail-shaped and at least one connection protrusion (3) is designed to be dovetail-shaped in a complementary manner thereto.

11. The base system (28, 29) according to claim 9 or 10,
**characterized in that** each base panel (1, 15, 18, 20, 24, 25) is provided with connection geometries (8) around the edge, which geometries are identical, directly adjoin one another in a peripheral manner, and are in each case formed by a first edge portion (9) of the base panel (1, 15, 18, 20, 24, 25), a connection recess (2), a connection protrusion (3), and a second edge portion (10) of the base panel (1, 15, 18, 20, 24, 25) in this order, the connection recess (2) of the relevant connection geometry (8) directly adjoining the connection protrusion (3) of said connection geometry (8).

12. The base system (28, 29) according to any of claims 9 to 11,
**characterized in that** the base panels (1, 15, 18, 20, 24, 25) are identical.

13. The base system (28, 29) according to any of claims 9 to 12,
**characterized in that** at least one securing recess (21) for securing a small load carrier (27) placed on the base panel (20, 24, 25) against slipping relative to the base panel (20, 24, 25) is formed on an upper face (11, 14, 17) of at least one base panel (20, 24, 25), which faces away from the small load carrier (27).

14. A storage system (26) for storing objects, comprising at least two small load carriers (27) which can be placed next to one another on a flat subsurface, **characterized by** at least one base system (28, 29) according to any of claims 9 to 13.

15. The storage system (26) according to claim 14, **characterized in that** the relevant base panel (1, 15, 18, 20, 24, 25) has larger dimensions in the region of the connection protrusions (3) and smaller dimensions in the region of the connection recesses (2) than an upper face of the relevant small load carrier (27).

## Revendications

1. Système de fond (28, 29) destiné à être placé sur au moins deux bacs normalisés pour petites pièces (27), en particulier des bacs norme Europe, agencés l'un à côté de l'autre sur un support plan, le système de fond (28, 29) présentant au moins deux plaques de fond (1, 15, 18, 20, 24, 25) conçues de manière sensiblement rectangulaire, **caractérisé en ce que** chaque plaque de fond (1, 15, 18, 20, 24, 25) est pourvue, autour du bord périphérique, d'évidements de liaison (2) et de saillies de liaison (3) en alternance au moins indirecte, par l'intermédiaire desquels les plaques de fond (1, 15, 18, 20, 24, 25) peuvent être reliées au niveau du bord par complémentarité de forme, des faces (4, 5, 6, 7) opposées l'une à l'autre de la plaque de fond (1, 15, 18, 20, 24, 25) respective étant conçues de manière complémentaire l'une à l'autre, chaque plaque de fond (1, 15, 18, 20, 24, 25) étant pourvue, autour du bord périphérique, de géométries de liaison (8), qui sont conçues de manière identique et qui sont directement adjacentes en périphérie et chaque géométrie de liaison (8) étant formée par une première section de bord (9) de la plaque de fond (1, 15, 18, 20, 24, 25), un évidement de liaison (2), une saillie de liaison (3) et une seconde section de bord (10) de la plaque de fond (1, 15, 18, 20, 24, 25) dans cet ordre, l'évidement de liaison (2) de la géométrie de liaison (8) respective étant immédiatement adjacent à la saillie de liaison (3) de cette géométrie de liaison (8).

2. Système de fond (28, 29) selon la revendication 1,
**caractérisé en ce qu'**au moins un évidement de liaison (2) est conçu en forme de queue d'aronde et au moins une saillie de liaison (3) est conçue en forme de queue d'aronde de manière complémentaire à celui-ci.

3. Système de fond (28, 29) selon l'une des revendications précédentes,
**caractérisé en ce que** les plaques de fond (1, 15, 18, 20, 24, 25) sont conçues de manière identique.

4. Système de fond (28, 29) selon l'une des revendications précédentes,
**caractérisé en ce qu'**au moins un creux de sécurité (21), destiné à protéger un bac pour petites pièces (27) placé sur la plaque de fond (20, 24, 25) contre un glissement par rapport à la plaque de fond (20, 24, 25), est formé au niveau d'une face supérieure (11, 14, 17), opposée au bac pour petites pièces (27), d'au moins une plaque de fond (20, 24, 25).

5. Système de fond (28, 29) selon l'une des revendications précédentes,
**caractérisé en ce qu'**une face inférieure (12, 16, 19) orientée vers le bac pour petites pièces (27) d'au moins une plaque de fond (1, 15, 18, 20, 24, 25) est plus petite que la face supérieure (11, 14, 17) de la plaque de fond (1, 15, 18, 20, 24, 25).

6. Système de fond (28, 29) selon la revendication 5,
**caractérisé en ce qu'**un échelon (13) périphérique est conçu au niveau du bord entre la face supérieure (11, 14, 17) et la face inférieure (12, 16, 19).

7. Système de stockage (26) destiné à stocker des objets, présentant au moins deux bacs pour petites pièces (27) pouvant être placés l'un à côté de l'autre sur un support plan, **caractérisé par** au moins un système de fond (28, 29) selon l'une des revendications 1 à 6.

8. Système de stockage (26) selon la revendication 7,
**caractérisé en ce que** la plaque de fond (1, 15, 18, 20, 24, 25) respective est dimensionnée plus grande dans la zone des saillies de liaison (3) et plus petite dans la zone des évidements de liaison (2) qu'une face supérieure du bac pour petites pièces (27) respectif.

9. Système de fond (28, 29) destiné à être placé sur au moins deux bacs normalisés pour petites pièces (27), en particulier des bacs norme Europe, agencés l'un à côté de l'autre sur un support plan, le système de fond (28, 29) présentant au moins deux plaques de fond (1, 15, 18, 20, 24, 25) conçues de manière sensiblement rectangulaire, **caractérisé en ce que** chaque plaque de fond (1, 15, 18, 20, 24, 25) est pourvue, autour du bord périphérique, d'évidements de liaison (2) et de saillies de liaison (3) en alternance au moins indirecte, par l'intermédiaire desquels les plaques de fond (1, 15, 18, 20, 24, 25) peuvent être reliées les unes aux autres au niveau du bord par complémentarité de forme, des faces (4, 5, 6, 7) opposées l'une à l'autre de la plaque de fond (1, 15, 18, 20, 24, 25) respective étant conçues de manière complémentaire l'une à l'autre et une face inférieure (12, 16, 19) orientée vers le bac pour petites pièces (27) d'au moins une plaque de fond (1, 15, 18, 20, 24, 25) étant inférieure à la face supérieure (11, 14, 17) de la plaque de fond (1, 15, 18, 20, 24, 25), un échelon (13) périphérique étant conçu au niveau du bord entre la face supérieure (11, 14, 17) et la face inférieure (12, 16, 19).

10. Système de fond (28, 29) selon la revendication 9,
**caractérisé en ce qu'**au moins un évidement de liaison (2) est conçu en forme de queue d'aronde et au moins une saillie de liaison (3) est conçue en forme de queue d'aronde de manière complémentaire à celui-ci.

11. Système de fond (28, 29) selon la revendication 9 ou 10,
**caractérisé en ce que** chaque plaque de fond (1, 15, 18, 20, 24, 25) est pourvue, autour du bord périphérique, de géométries de liaison (8) qui sont conçues de manière identique, qui sont directement adjacentes l'une à l'autre en périphérie et qui sont formées respectivement par une première section de bord (9) de la plaque de fond (1, 15, 18, 20, 24, 25), un évidement de liaison (2), une saillie de liaison (3) et une seconde section de bord (10) de la plaque de fond (1, 15, 18, 20, 24, 25) dans cet ordre, l'évidement de liaison (2) de la géométrie de liaison (8) respective étant directement adjacent à la saillie de liaison (3) de cette géométrie de liaison (8).

12. Système de fond (28, 29) selon l'une des revendications 9 à 11,
**caractérisé en ce que** les plaques de fond (1, 15, 18, 20, 24, 25) sont conçues de manière identique.

13. Système de fond (28, 29) selon l'une des revendications 9 à 12,
**caractérisé en ce qu'**au moins un creux de sécurité (21), destiné à protéger un bac pour petites pièces (27) placé sur la plaque de fond (20, 24, 25) contre un glissement par rapport à la plaque de fond (20, 24, 25), est formé au niveau d'une face supérieure (11, 14, 17), opposée au bac pour petites pièces (27), d'au moins une plaque de fond (20, 24, 25).

14. Système de stockage (26) destiné à stocker des objets, présentant au moins deux bacs pour petites pièces (27) pouvant être placés l'un à côté de l'autre sur un support plan, **caractérisé par** au moins un système de fond (28, 29) selon l'une des revendications 9 à 13.

15. Système de stockage (26) selon la revendication 14,
**caractérisé en ce que** la plaque de fond (1, 15, 18, 20, 24, 25) respective est dimensionnée plus grande dans la zone des saillies de liaison (3) et plus petite dans la zone des évidements de liaison (2) qu'une face supérieure du bac pour petites pièces (27) respectif.
